# EUROPEAN PATENT APPLICATION

(11) **EP 2 988 258 A1**
(43) Date of publication of application: **24.02.2016**
(21) Application number: 15181419.1
(22) Date of filing: 18.08.2015
(51) Int. Cl.: G06Q 10/10

(54) **SYSTEM AND METHOD FOR DETERMINING A COHORT**

(30) Priority: 19.08.2014 US 201414463615
(71) Applicant: Palantir Technologies, Inc., Palo Alto, California 94301 (US)
(72) Inventor: MUKHERJEE, Anirvan, Palo Alto, CA California 94301 (US); ERENRICH, Daniel, Palo Alto, 94301 (CA); BINGHAM, Eli, Palo Alto, 94301 (CA)
(74) Representative: Derry, Paul Stefan

(57) **Abstract**

In relation to collecting and classifying large sets of data in an appropriate manner, a system and method is provided for determining a cohort. Large data sets can be mined to identify relevant data, and this can be presented through a user interface such as to allow the data easily to be consumed. The method can include acquiring user inputs and identifying, based on the user inputs, a plurality of entities sharing one or more attributes with a first entity. The method can also include acquiring information including one or more interactions associated with the first entity and the plurality of entities and creating a cohort by processing the one or more interactions to select other entities associated with the first entity. Selecting the other entities can be based on a similarity between attributes of consuming entities that are associated with the first entity and the other entities; a similarity between location information associated with the first entity and the other entities.

## Description

### BACKGROUND

The amount of information being processed and stored is rapidly increasing as technology advances present an ever-increasing ability to generate and store data. This data is commonly stored in computer-based systems in structured data stores. For example, one common type of data store is a so-called "flat" file such as a spreadsheet, plain-text document, or XML document. Another common type of data store is a relational database comprising one or more tables. Other examples of data stores that comprise structured data include, without limitation, files systems, object collections, record collections, arrays, hierarchical trees, linked lists, stacks, and combinations thereof.

Numerous organizations, including industry, retail, and government entities, recognize that important information and decisions can be drawn if large data sets can be analyzed to identify patterns of behavior. For example, a large data set can sometimes include billions of entries. Collecting and classifying large sets of data in an appropriate manner allows these organizations to more quickly and efficiently identify these patterns, thereby allowing them to make more informed decisions.

### BRIEF DESCRIPTION OF THE DRAWINGS

Reference will now be made to the accompanying drawings, which illustrate exemplary embodiments of the present disclosure. In the drawings:
**FIG. 1** is a block diagram of an exemplary computer system, consistent with embodiments of the present disclosure;
**FIG. 2** is block diagram of an exemplary system for determining a cohort, consistent with embodiments of the present disclosure;
**FIG. 3** is a block diagram of an exemplary data structure containing interaction information accessed in the process of determining a cohort, consistent with the embodiments of the present disclosure;
**FIG. 4** is a flowchart representing an exemplary process for determining a cohort, consistent with embodiments of the present disclosure;
**FIG. 5** illustrates an exemplary user interface receiving one or more user inputs to determine a cohort, consistent with embodiments of the present disclosure;
**FIG. 6** illustrates a screenshot of an exemplary user interface representing geographical revenue information for a cohort, consistent with embodiments of the present disclosure;
**FIG. 7** illustrates a screenshot of an exemplary user interface representing a comparison of entity performance with its associated cohort, consistent with embodiments of the present disclosure; and
**FIG. 8** illustrates a screenshot of an exemplary user interface comparing entity revenue performance with cohort revenue performance, consistent with embodiments of the present disclosure.

### DETAILED DESCRIPTION OF EXEMPLARY EMBODIMENTS

Reference will now be made in detail to several exemplary embodiments, including those illustrated in the accompanying drawings. Whenever possible, the same reference numbers will be used throughout the drawings to refer to the same or like parts.

Embodiments disclosed herein are directed to, among other things, to systems and methods that can determine a cohort after evaluating one or more large data sets. A cohort of entities can to be referred to as, for example, a group of entities, a set of entities, or an associated set of entities. It can be appreciated that the cohort of entities can be referred to by using other names. Provisioning entities, such as a restaurants, movie theaters, bike shops, and hotels, can use performance information associated with the cohort to assess their competitive position. The provisioning entities do not have performance information because it is not readily available and it cannot be readily disclosed due to confidentiality concerns. A cohort allows a provisioning entity (e.g., a pizzeria) to compare its performance (e.g., revenues, number of customers, average ticket size, etc.) with its competitors (e.g., specifically, other pizzerias in the area or generally, other restaurants in the area) without revealing the performance of the specific entities (e.g., the pizzeria's competitors). Methods and systems for analyzing entity performance are described in U.S. Patent Application Nos. 14/306,138, 4/306,147, and 14/306,154, all titled, "Methods and Systems for Analyzing Entity Performance," (collectively, the "Entity Performance Applications") the entire contents of which are expressly incorporated herein by reference for all purposes.

For example, the systems and methods can acquire one or more user inputs, identify, based on the one or more user inputs, a plurality of entities sharing one or more attributes with a first entity, acquire information including one or more interactions associated with the first entity and the plurality of entities, create the cohort by processing the one or more interactions to select one or more entities of the plurality of entities associated with the first entity, and output the cohort. In some embodiments, selecting the one or more entities can be based on a similarity between attributes of consuming entities that are associated with the first entity and the one or more entities of the plurality of entities, a similarity between location information associated with the first entity and the one or more entities of the plurality of entities, a market share of the first entity and the one or more entities of the plurality of entities, and a wallet share of the first entity and the one or more entities of the plurality of entities.

The operations, techniques, and/or components described herein are implemented by a computer system, which can include one or more special-purpose computing devices. The special-purpose computing devices can be hard-wired to perform the operations, techniques, and/or components described herein. The special-purpose computing devices can include digital electronic devices such as one or more application-specific integrated circuits (ASICs) or field programmable gate arrays (FPGAs) that are persistently programmed to perform the operations, techniques, and/or components described herein. The special-purpose computing devices can include one or more hardware processors programmed to perform such features of the present disclosure pursuant to program instructions in firmware, memory, other storage, or a combination. Such special-purpose computing devices can combine custom hard-wired logic, ASICs, or FPGAs with custom programming to accomplish the techniques and other features of the present disclosure. The special-purpose computing devices can be desktop computer systems, portable computer systems, handheld devices, networking devices, or any other device that incorporates hard-wired and/or program logic to implement the techniques and other features of the present disclosure.

The one or more special-purpose computing devices can be generally controlled and coordinated by operating system software, such as iOS, Android, Blackberry, Chrome OS, Windows XP, Windows Vista, Windows 7, Windows 8, Windows Server, Windows CE, Unix, Linux, SunOS, Solaris, VxWorks, or other compatible operating systems. In other embodiments, the computing device can be controlled by a proprietary operating system. Operating systems control and schedule computer processes for execution, perform memory management, provide file system, networking, I/O services, and provide a user interface functionality, such as a graphical user interface ("GUI"), among other things.

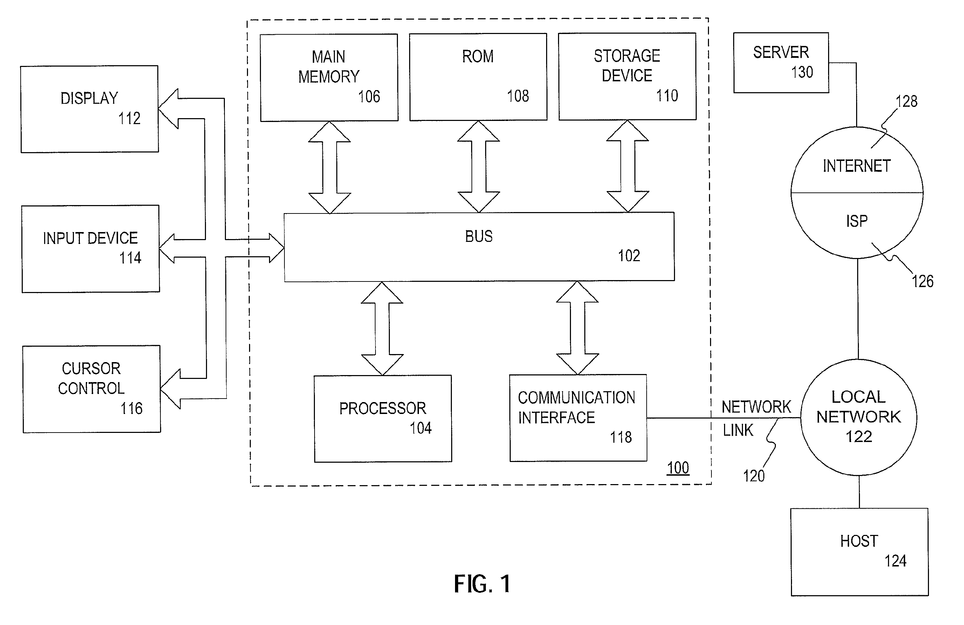

By way of example, **FIG. 1** is a block diagram that illustrates an implementation of a computer system 100, which, as described above, can comprise one or more electronic devices. Computer system 100 includes a bus 102 or other communication mechanism for communicating information, and one or more hardware processors 104 (denoted as processor 104 for purposes of simplicity), coupled with bus 102 for processing information. One or more hardware processors 104 can be, for example, one or more microprocessors.

Computer system 100 also includes a main memory 106, such as a random access memory (RAM) or other dynamic storage device, coupled to bus 102 for storing information and instructions to be executed by one or more processors 104. Main memory 106 also can be used for storing temporary variables or other intermediate information during execution of instructions to be executed by processor 104. Such instructions, when stored in non-transitory storage media accessible to one or more processors 104, render computer system 100 into a special-purpose machine that is customized to perform the operations specified in the instructions.

Computer system 100 further includes a read only memory (ROM) 108 or other static storage device coupled to bus 102 for storing static information and instructions for processor 104. A storage device 110, such as a magnetic disk, optical disk, or USB thumb drive (Flash drive), etc., is provided and coupled to bus 102 for storing information and instructions.

Computer system 100 can be coupled via bus 102 to a display 112, such as a cathode ray tube (CRT), an LCD display, or a touchscreen, for displaying information to a computer user. An input device 114, including alphanumeric and other keys, is coupled to bus 102 for communicating information and command selections to one or more processors 104. Another type of user input device is cursor control 116, such as a mouse, a trackball, or cursor direction keys for communicating direction information and command selections to one or more processors 104 and for controlling cursor movement on display 112. The input device typically has two degrees of freedom in two axes, a first axis (for example, x) and a second axis (for example, y), that allows the device to specify positions in a plane. In some embodiments, the same direction information and command selections as cursor control may be implemented via receiving touches on a touch screen without a cursor.

Computer system 100 can include a user interface module to implement a GUI that may be stored in a mass storage device as executable software codes that are executed by the one or more computing devices. This and other modules may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

In general, the word "module," as used herein, refers to logic embodied in hardware or firmware, or to a collection of software instructions, possibly having entry and exit points, written in a programming language, such as, for example, Java, Lua, C, and C++. A software module can be compiled and linked into an executable program, installed in a dynamic link library, or written in an interpreted programming language such as, for example, BASIC, Perl, Python, or Pig. It will be appreciated that software modules can be callable from other modules or from themselves, and/or can be invoked in response to detected events or interrupts. Software modules configured for execution on computing devices can be provided on a computer readable medium, such as a compact disc, digital video disc, flash drive, magnetic disc, or any other tangible medium, or as a digital download (and can be originally stored in a compressed or installable format that requires installation, decompression, or decryption prior to execution). Such software code can be stored, partially or fully, on a memory device of the executing computing device, for execution by the computing device. Software instructions can be embedded in firmware, such as an EPROM. It will be further appreciated that hardware modules can be comprised of connected logic units, such as gates and flip-flops, and/or can be comprised of programmable units, such as programmable gate arrays or processors. The modules or computing device functionality described herein are preferably implemented as software modules, but can be represented in hardware or firmware. Generally, the modules described herein refer to logical modules that may be combined with other modules or divided into sub-modules despite their physical organization or storage.

Computer system 100 can implement the techniques and other features described herein using customized hard-wired logic, one or more ASICs or FPGAs, firmware and/or program logic which in combination with the electronic device causes or programs computer system 100 to be a special-purpose machine. According to some embodiments, the techniques and other features described herein are performed by computer system 100 in response to one or more processors 104 executing one or more sequences of one or more instructions contained in main memory 106. Such instructions can be read into main memory 106 from another storage medium, such as storage device 110. Execution of the sequences of instructions contained in main memory 106 causes one or more processors 104 to perform the process steps described herein. In alternative embodiments, hard-wired circuitry can be used in place of or in combination with software instructions.

The term "non-transitory media" as used herein refers to any media storing data and/or instructions that cause a machine to operate in a specific fashion. Such non-transitory media can comprise non-volatile media and/or volatile media. Non-volatile media includes, for example, optical or magnetic disks, such as storage device 150. Volatile media includes dynamic memory, such as main memory 106. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge, a register memory, a processor cache, and networked versions of the same.

Non-transitory media is distinct from, but can be used in conjunction with, transmission media. Transmission media participates in transferring information between storage media. For example, transmission media includes coaxial cables, copper wire and fiber optics, including the wires that comprise bus 102. Transmission media can also take the form of acoustic or light waves, such as those generated during radio-wave and infra-red data communications.

Various forms of media can be involved in carrying one or more sequences of one or more instructions to one or more processors 104 for execution. For example, the instructions can initially be carried on a magnetic disk or solid state drive of a remote computer. The remote computer can load the instructions into its dynamic memory and send the instructions over a telephone line using a modem. A modem local to computer system 100 can receive the data on the telephone line and use an infra-red transmitter to convert the data to an infra-red signal. An infra-red detector can receive the data carried in the infra-red signal and appropriate circuitry can place the data on bus 102. Bus 102 carries the data to main memory 106, from which processor 104 retrieves and executes the instructions. The instructions received by main memory 106 can optionally be stored on storage device 110 either before or after execution by one or more processors 104.

Computer system 100 can also include a communication interface 118 coupled to bus 102. Communication interface 118 can provide a two-way data communication coupling to a network link 120 that is connected to a local network 122. For example, communication interface 118 can be an integrated services digital network (ISDN) card, cable modem, satellite modem, or a modem to provide a data communication connection to a corresponding type of telephone line. As another example, communication interface 118 can be a local area network (LAN) card to provide a data communication connection to a compatible LAN. Wireless links can also be implemented. In any such implementation, communication interface 118 can send and receive electrical, electromagnetic, or optical signals that carry digital data streams representing various types of information.

Network link 120 can typically provide data communication through one or more networks to other data devices. For example, network link 120 can provide a connection through local network 122 to a host computer 124 or to data equipment operated by an Internet Service Provider (ISP) 126. ISP 126 in turn provides data communication services through the world wide packet data communication network now commonly referred to as the "Internet" 128. Local network 122 and Internet 128 both use electrical, electromagnetic, or optical signals that carry digital data streams. The signals through the various networks and the signals on network link 120 and through communication interface 118, which carry the digital data to and from computer system 100, are example forms of transmission media.

Computer system 100 can send messages and receive data, including program code, through the network(s), network link 120 and communication interface 118. In the Internet example, a server 130 might transmit a requested code for an application program through Internet 128, ISP 126, local network 122 and communication interface 118. The received code can be executed by one or more processors 104 as it is received, and/or stored in storage device 110, or other non-volatile storage for later execution.

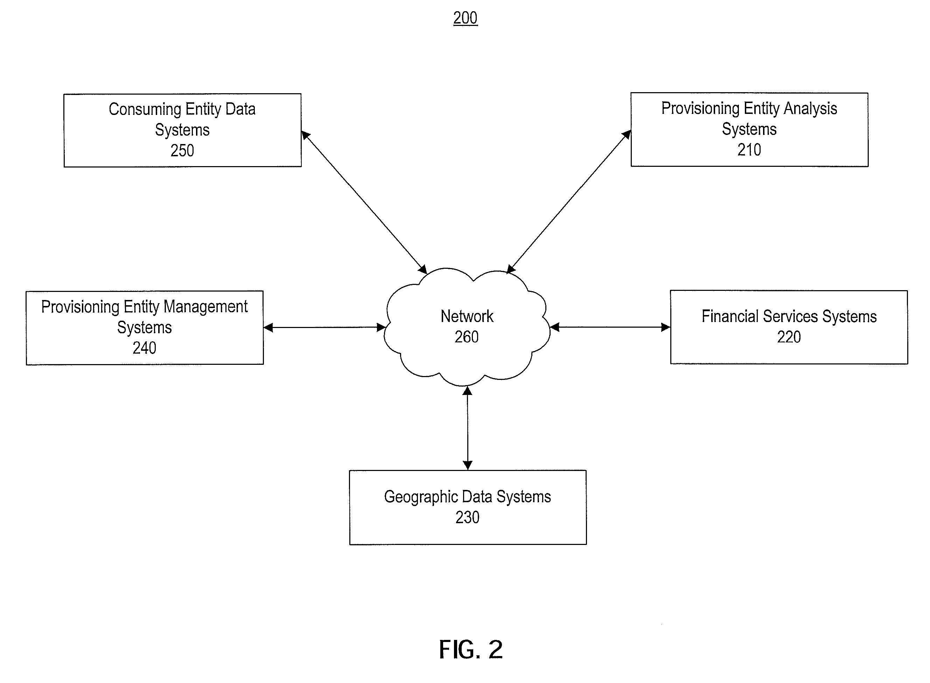

**FIG. 2** is a block diagram of an exemplary system 200 for performing a method for determining a cohort associated with a first provisioning entity, consistent with disclosed embodiments. In some embodiments, the first provisioning entity is a merchant and system 200 can include provisioning entity analysis system 210, one or more financial services systems 220, one or more geographic data systems 230, one or more provisioning entity management systems 240, and one or more consuming entity data systems 250. The components and arrangement of the components included in system 200 can vary depending on the embodiment. For example, the functionality described below with respect to financial services systems 220 can be embodied in consuming entity data systems 250, or vice-versa. Thus, system 200 can include fewer or additional components that perform or assist in the performance of one or more processes to generate the cohort, consistent with the disclosed embodiments.

One or more components of system 200 can be computing systems configured to determine the cohort. As further described herein, components of system 200 can include one or more computing devices (e.g., computer(s), server(s), etc.), memory storing data and/or software instructions (e.g., database(s), memory devices, etc.), and other known computing components. In some embodiments, the one or more computing devices are configured to execute software or a set of programmable instructions stored on one or more memory devices to perform one or more operations, consistent with the disclosed embodiments. Components of system 200 can be configured to communicate with one or more other components of system 200, including provisioning entity analysis system 210, one or more financial services systems 220, one or more geographic data systems 230, one or more provisioning entity management systems 240, and one or more consumer data systems 250. In certain aspects, users can operate one or more components of system 200. The one or more users can be employees of, or associated with, the entity corresponding to the respective component(s) (e.g., someone authorized to use the underlying computing systems or otherwise act on behalf of the entity).

Provisioning entity analysis system 210 can be a computing system configured to determine the cohort. For example, provisioning entity analysis system 210 can be a computer system configured to execute software or a set of programmable instructions that collect or receive financial interaction data, consuming entity data, and provisioning entity data and process it to determine the actual transaction amount of each transaction associated with the first provisioning entity and a plurality of provisioning entities. The data can be used to select one or more provisioning entities from the plurality of provisioning entities to form a cohort associated with the first provisioning entity. In some embodiments, provisioning entity analysis system 210 can be implemented using a computer system 100, as shown in **FIG. 1** and described above.

Provisioning entity analysis system 210 can include one or more computing devices (e.g., server(s)), memory storing data and/or software instructions (e.g., database(s), memory devices, etc.) and other known computing components. According to some embodiments, provisioning entity analysis system 210 can include one or more networked computers that execute processing in parallel or use a distributed computing architecture. Provisioning entity analysis system 210 can be configured to communicate with one or more components of system 200, and it can be configured to determine the cohort via an interface(s) accessible by users over a network (e.g., the Internet). For example, provisioning entity analysis system 210 can include a web server that hosts a web page accessible through network 260 by provisioning entity management systems 240. In some embodiments, provisioning entity analysis system 210 can include an application server configured to provide data to one or more client applications executing on computing systems connected to provisioning entity analysis system 210 via network 260.

In some embodiments, provisioning entity analysis system 210 can be configured to determine the cohort by processing and analyzing data collected from one or more components of system 200. For example, provisioning entity analysis system 210 can determine that the Big Box Merchant store located at 123 Main St., in Burbank, CA belongs to a cohort associated with Mom and Pop Shop store located at 255 Oak St., in Burbank, CA. Provisioning entity analysis system 210 can provide an analysis of a provisioning entity's performance (e.g., Mom and Pop Shop) based on the performance of the cohort (e.g., a cohort including Big Box Merchant) associated with the provisioning entity. For example, for the Mom and Pop Shop store located at 255 Oak St., in Burbank, CA, the provisioning entity analysis system 210 can provide an analysis that the store is performing above expectations as compared to the other provisioning entities in the cohort associated with the Mom and Pop Shop. Exemplary processes that can be used by provisioning entity analysis system 210 are described in greater detail in the Entity Performance Applications.

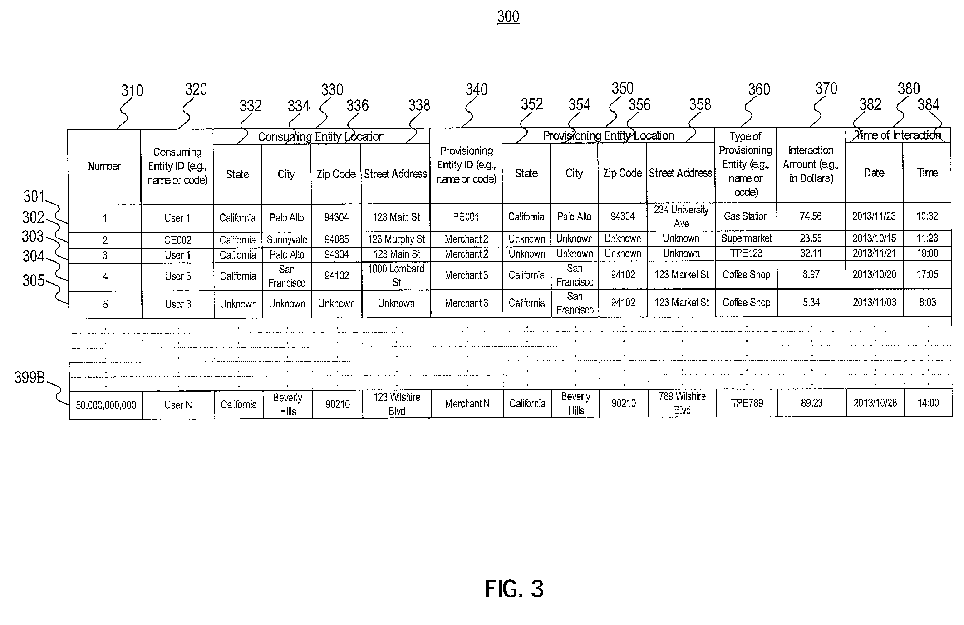

Referring again to **FIG. 2****,** financial services system 220 can be a computing system associated with a financial service provider, such as a bank, credit card issuer, credit bureau, credit agency, or other entity that generates, provides, manages, and/or maintains financial service accounts for one or more users. Financial services system 220 can generate, maintain, store, provide, and/or process financial data associated with one or more financial service accounts. Financial data can include, for example, financial service account data, such as financial service account identification data, account balance, available credit, existing fees, reward points, user profile information, and financial service account interaction data, such as interaction dates, interaction amounts, interaction types, and location of interaction. In some embodiments, each interaction of financial data can include several categories of information associated with the interaction. For example, each interaction can include categories such as number category; consuming entity identification category; consuming entity location category; provisioning entity identification category; provisioning entity location category; type of provisioning entity category; interaction amount category; and time of interaction category, as described in **FIG. 3****.** It will be appreciated that financial data can comprise either additional or fewer categories than the exemplary categories listed above. Financial services system 220 can include infrastructure and components that are configured to generate and/or provide financial service accounts such as credit card accounts, checking accounts, savings account, debit card accounts, loyalty or reward programs, lines of credit, and the like.

Geographic data systems 230 can include one or more computing devices configured to provide geographic data to other computing systems in system 200 such as provisioning entity analysis system 210. For example, geographic data systems 230 can provide geodetic coordinates when provided with a street address of vice-versa. In some embodiments, geographic data systems 230 exposes an application programming interface (API) including one or more methods or functions that can be called remotely over a network, such as network 260. According to some embodiments, geographic data systems 230 can provide information concerning routes between two geographic points. For example, provisioning entity analysis system 210 can provide two addresses and geographic data systems 230 can provide, in response, the aerial distance between the two addresses, the distance between the two addresses using roads, and/or a suggested route between the two addresses and the route's distance.

According to some embodiments, geographic data systems 230 can also provide map data to provisioning entity analysis system 210 and/or other components of system 200. The map data can include, for example, satellite or overhead images of a geographic region or a graphic representing a geographic region. The map data can also include points of interest, such as landmarks, malls, shopping centers, schools, or popular restaurants or retailers, for example.

Provisioning entity management systems 240 can be one or more computing devices configured to perform one or more operations consistent with disclosed embodiments. For example, provisioning entity management systems 240 can be a desktop computer, a laptop, a server, a mobile device (e.g., tablet, smart phone, etc.), or any other type of computing device configured to determine a cohort from provisioning entity analysis system 210. According to some embodiments, provisioning entity management systems 240 can comprise a network-enabled computing device operably connected to one or more other presentation devices, which can themselves constitute a computing system. For example, provisioning entity management systems 240 can be connected to a mobile device, telephone, laptop, tablet, or other computing device.

Provisioning entity management systems 240 can include one or more processors configured to execute software instructions stored in memory. Provisioning entity management systems 240 can include software or a set of programmable instructions that when executed by a processor performs known Internet-related communication and content presentation processes. For example, provisioning entity management systems 240 can execute software or a set of instructions that generates and displays interfaces and/or content on a presentation device included in, or connected to, provisioning entity management systems 240. In some embodiments, provisioning entity management systems 240 can be a mobile device that executes mobile device applications and/or mobile device communication software that allows provisioning entity management systems 240 to communicate with components of system 200 over network 260. The disclosed embodiments are not limited to any particular configuration of provisioning entity management systems 240.

Provisioning entity management systems 240 can be one or more computing systems associated with a provisioning entity that provides products (e.g., goods and/or services), such as a restaurant (e.g., Outback Steakhouse®, Burger King®, etc.), retailer (e.g., Amazon.com®, Target®, etc.), grocery store, mall, shopping center, service provider (e.g., utility company, insurance company, financial service provider, automobile repair services, movie theater, etc.), non-profit organization (ACLU™, AARP®, etc.) or any other type of entity that provides goods, services, and/or information that consuming entities (i.e., end users or other business entities) can purchase, consume, use, etc. For ease of discussion, the exemplary embodiments presented herein relate to purchase interactions involving goods from retail provisioning entity systems. Provisioning entity management systems 240, however, is not limited to systems associated with retail provisioning entities that conduct business in any particular industry or field.

Provisioning entity management systems 240 can be associated with computer systems installed and used at a brick and mortar provisioning entity locations where a consumer can physically visit and purchase goods and services. Such locations can include computing devices that perform financial service interactions with consumers (e.g., Point of Sale (POS) terminal(s), kiosks, etc.). Provisioning entity management systems 240 can also include back and/or front-end computing components that store data and execute software or a set of instructions to perform operations consistent with disclosed embodiments, such as computers that are operated by employees of the provisioning entity (e.g., back office systems, etc.). Provisioning entity management systems 240 can also be associated with a provisioning entity that provides goods and/or service via known online or e-commerce types of solutions. For example, such a provisioning entity can sell products via a website using known online or e-commerce systems and solutions to market, sell, and process online interactions. Provisioning entity management systems 240 can include one or more servers that are configured to execute stored software or a set of instructions to perform operations associated with a provisioning entity, including one or more processes associated with processing purchase interactions, generating interaction data, generating product data (e.g., SKU data) relating to purchase interactions, for example.

Consuming entity data systems 250 can include one or more computing devices configured to provide demographic data regarding consumers. For example, consuming entity data systems 250 can provide information regarding the name, address, gender, income level, age, email address, or other information about consumers. Consuming entity data systems 250 can include public computing systems such as computing systems affiliated with the U.S. Bureau of the Census, the U.S. Bureau of Labor Statistics, or FedStats, or it can include private computing systems such as computing systems affiliated with financial institutions, credit bureaus, social media sites, marketing services, or some other organization that collects and provides demographic data, such as First Data or Factual.

Network 260 can be any type of network or combination of networks configured to provide electronic communications between components of system 200. For example, network 260 can be any type of network (including infrastructure) that provides communications, exchanges information, and/or facilitates the exchange of information, such as the Internet, a Local Area Network, or other suitable connection(s) that enables the sending and receiving of information between the components of system 200. Network 260 may also comprise any combination of wired and wireless networks. In other embodiments, one or more components of system 200 can communicate directly through a dedicated communication link(s), such as links between provisioning entity analysis system 210, financial services system 220, geographic data systems 230, provisioning entity management systems 240, and consuming entity data systems 250.

**FIG. 3** is a block diagram of an exemplary data structure 300, consistent with embodiments of the present disclosure. Data structure 300 can store data records associated with interactions involving multiple entities. In some embodiments, data structure 300 can be a Relational Database Management System (RDBMS) that stores interaction data as sections of rows of data in relational tables. An RDBMS can be designed to efficiently return data for an entire row, or record, in as few operations as possible. An RDBMS can store data by serializing each row of data of data structure 300. For example, in an RDBMS, data associated with interaction 1 of **FIG. 3** can be stored serially such that data associated with all categories of interaction 1 can be accessed in one operation.

Alternatively, data structure 300 can be a column-oriented database management system that stores data as sections of columns of data rather than rows of data. This column-oriented DBMS can have advantages, for example, for data warehouses, customer relationship management systems, and library card catalogs, and other ad hoc inquiry systems where aggregates are computed over large numbers of similar data items. A column-oriented DBMS can be more efficient than an RDBMS when an aggregate needs to be computed over many rows but only for a notably smaller subset of all columns of data, because reading that smaller subset of data can be faster than reading all data. A column-oriented DBMS can be designed to efficiently return data for an entire column, in as few operations as possible. A column-oriented DBMS can store data by serializing each column of data of data structure 300. For example, in a column-oriented DBMS, data associated with a category (e.g., consuming entity identification category 320) can be stored serially such that data associated with that category for all interactions of data structure 300 can be accessed in one operation.

As shown in **FIG. 3****,** data structure 300 can comprise data associated with a very large number of interactions associated with multiple entities. For example, data structure 300 can include 50 billion interactions. In some embodiments, interactions associated with multiple entities can be referred to as transactions between multiple entities. Where appropriate, the terms interactions and transactions are intended to convey the same meaning and can be used interchangeably throughout this disclosure. While each interaction of data structure 300 is depicted as a separate row in **FIG. 3****,** it will be understood that each such interaction can be represented by a column or any other known technique in the art. Each interaction data can include several categories of information. For example, the several categories can include, number category 310; consuming entity identification category 320; consuming entity location category 330; provisioning entity identification category 340; provisioning entity location category 350; type of provisioning entity category 360; interaction amount category 370; and time of interaction category 380. It will be understood that **FIG. 3** is merely exemplary and that data structure 300 can include even more categories of information associated with an interaction.

Number category 310 can uniquely identify each interaction of data structure 300. For example, data structure 300 depicts 50 billion interactions as illustrated by number category 310 of the last row of data structure 300 as 50,000,000,000. In **FIG. 3****,** each row depicting a interaction can be identified by an element number. For example, interaction number 1 can be identified by element 301; interaction number 2 can be identified by element 302; and so on such that interaction 50,000,000,000 can be identified by 399B. It will be understood that this disclosure is not limited to any number of interactions and further that this disclosure can extend to a data structure with more or fewer than 50 billion interactions. It is also appreciated that number category 310 need not exist in data structure 300.

Consuming entity identification category 320 can identify a consuming entity. In some embodiments, consuming entity identification category 320 can represent a name (e.g., User 1 for interaction 301; User N for interaction 399B) of the consuming entity. Alternatively, consuming entity identification category 320 can represent a code uniquely identifying the consuming entity (e.g., CE002 for interaction 302). For example, the identifiers under the consuming entity identification category 320 can be a credit card number that can identify a person or a family, a social security number that can identify a person, a phone number or a MAC address associated with a cell phone of a user or family, or any other identifier.

Consuming entity location category 330 can represent a location information of the consuming entity. In some embodiments, consuming entity location category 330 can represent the location information by providing at least one of: a state of residence (e.g., state sub-category 332; California for element 301; unknown for interaction 305) of the consuming entity; a city of residence (e.g., city sub-category 334; Palo Alto for interaction 301; unknown for interaction 305) of the consuming entity; a zip code of residence (e.g., zip code sub-category 336; 94304 for interaction 301; unknown for interaction 305) of the consuming entity; and a street address of residence (e.g., street address sub-category 338; 123 Main St. for interaction 301; unknown for interaction 305) of the consuming entity.

Provisioning entity identification category 340 can identify a provisioning entity (e.g., a merchant or a coffee shop). In some embodiments, provisioning entity identification category 340 can represent a name of the provisioning entity (e.g., Merchant 2 for interaction 302). Alternatively, provisioning entity identification category 340 can represent a code uniquely identifying the provisioning entity (e.g., PE001 for interaction 301). Provisioning entity location category 350 can represent a location information of the provisioning entity. In some embodiments, provisioning entity location category 350 can represent the location information by providing at least one of: a state where the provisioning entity is located (e.g., state sub-category 352; California for interaction 301; unknown for interaction 302); a city where the provisioning entity is located (e.g., city sub-category 354; Palo Alto for interaction 301; unknown for interaction 302); a zip code where the provisioning entity is located (e.g., zip code sub-category 356; 94304 for interaction 301; unknown for interaction 302); and a street address where the provisioning entity is located (e.g., street address sub-category 358; 234 University Ave. for interaction 301; unknown for interaction 302).

Type of provisioning entity category 360 can identify a type of the provisioning entity involved in each interaction. In some embodiments, type of provisioning entity category 360 of the provisioning entity can be identified by a category name customarily used in the industry (e.g., Gas Station for interaction 301) or by an identification code that can identify a type of the provisioning entity (e.g., TPE123 for interaction 303). Alternatively, type of the provisioning entity category 360 can include a merchant category code ("MCC") used by credit card companies to identify any business that accepts one of their credit cards as a form of payment. For example, MCC can be a four-digit number assigned to a business by credit card companies (e.g., American Express TM, MasterCard TM, VISA TM) when the business first starts accepting one of their credit cards as a form of payment.

In some embodiments, type of provisioning entity category 360 can further include a sub-category (not shown in **FIG. 3****),** for example, type of provisioning entity sub-category 361 that can further identify a particular sub-category of provisioning entity. For example, an interaction can comprise a type of provisioning entity category 360 as a restaurant and type of provisioning entity sub-category 361 as either a pizzeria or an Indian restaurant. It will be understood that the above-described examples for type of provisioning entity category 360 and type of provisioning entity sub-category 361 are non-limiting and that data structure 300 can include other kinds of such categories and sub-categories associated with an interaction.

Interaction amount category 370 can represent a transaction amount (e.g., $74-56 for interaction 301) involved in each interaction. Time of interaction category 380 can represent a time at which the interaction was executed. In some embodiments, time of interaction category 380 can be represented by a date (e.g., date sub-category 382; November 23, 2013, for interaction 301) and time of the day (e.g., time sub-category 384; 10:32 AM local time for interaction 301). Time sub-category 384 can be represented in either military time or some other format. Alternatively, time sub-category 384 can be represented with a local time zone of either provisioning entity location category 350 or consuming entity location category 330.

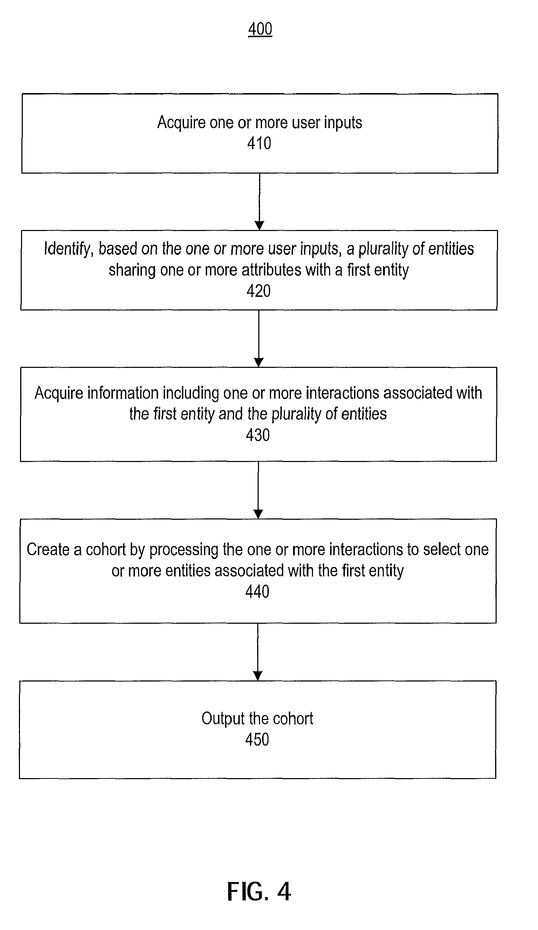

**FIG. 4** depicts a flowchart representing an exemplary process for determining a cohort, consistent with embodiments of the present disclosure. While the flowchart discloses the following steps in a particular order, it will be appreciated that at least some of the steps can be moved, modified, or deleted where appropriate, consistent with the teachings of the present disclosure. The determination of a cohort can be performed in full or in part by a provisioning entity analysis system (e.g., provisioning entity analysis system 210). It is appreciated that some of these steps can be performed in full or in part by other systems (e.g., such as those systems identified above in **FIG. 1****).**

In step 410, one or more user inputs can be received. In some embodiments, the one or more user inputs can include information about the entity for which the cohort should be created. For example, a pizzeria could be interested in analyzing the performance of similar entities competing with it, such as other local restaurants (e.g., other pizzerias and other comparable restaurants). The one or more user inputs can include different categories of information associated with the entity (e.g., the pizzeria). For example, the information can include the name of the pizzeria (e.g., Paul's Pizza), its address (e.g., 123 Main St., Palo Alto CA 94301), and its contact information (e.g., (650) 101-1001). In some embodiments, the one or more user inputs can include additional information associated with the entity. For example, the additional information can include a type of the entity (e.g., restaurant) and one or more descriptive tags associated with the entity (e.g., affordable, trendy, patio, etc.).

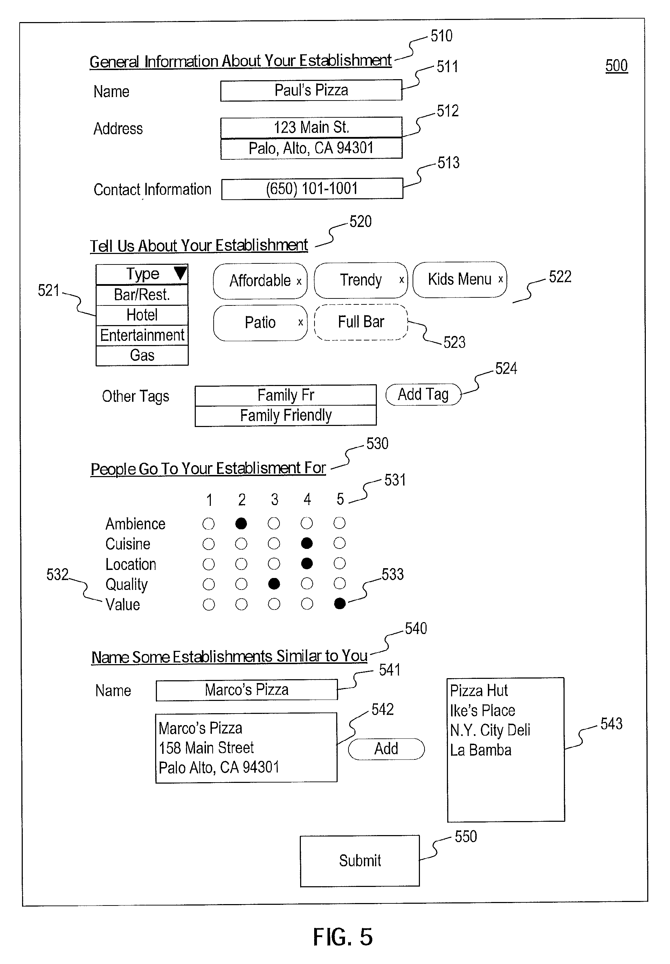

The one or more user inputs can also include weighted characteristics associated with the entity. The characteristics can indicate why consuming entities visit the provisioning entity (e.g., ambience, cuisine, location, quality, value, etc.). In some embodiments, characteristics can be assigned a value based on importance (e.g., 1 for least important and 5 for most important). For example, a pizzeria could have the weighted characteristics of 5 for value and 2 for ambience indicating that consuming entities visit the pizzeria for its prices and not for its atmosphere. In some embodiments, characteristics can be input as a weighted list. For example, a pizzeria can have the following characteristics, which are listed in order of most important to least important: value, location, cuisine, quality, and ambience. The one or more use inputs can also include a list of entities related to the first entity. For example, a user input can be Marco's Pizza, which can be a known competitor of the first entity (e.g., the pizzeria). Provisioning entity analysis system 210 can receive the one or more user inputs through a user interface, such as user interface 500 described in greater detail in **FIG. 5** below.

In step 420, a plurality of entities sharing one or more attributes with the first entity (e.g. the pizzeria) can be identified. For example, the plurality of entities can be all fast food restaurants within a given zip code or all pizzerias within an area (e.g., San Francisco, CA). The plurality of entities can be identified by accessing a data structure (e.g., data structure 300) comprising several categories of information associated with multiple entities. The data structure can represent information associated with a very large number of entities. The data structure can be similar to the exemplary data structure 300 described in **FIG. 3** above.

The plurality of entities can be identified, for example, by filtering the data structure (e.g., data structure 300) for the one or attributes associated with the first entity (e.g., pizzeria). In some embodiments, there can be a mapping between the one or more attributes and the several categories of the data structure (e.g., data structure 300). For example, the pizzeria's zip code (e.g., 94301) can be mapped to provisioning entity location category 350 and further to zip code sub-category 356. As another example, the pizzeria's type (e.g., restaurant) can be mapped to provisioning entity category 360. It will be appreciated that the exemplary mapping techniques described above are merely exemplary and other mapping techniques can be defined within the scope of this disclosure. In some embodiments, the plurality of entities can be identified by selecting the entities with the same information in at least one of the selected categories (e.g., a zip code of 94031 or a restaurant category type). In some embodiments, the plurality of entities can be identified by selecting the entities with the same information in all of the selected categories (e.g., a zip code of 94031 and a restaurant category type).

The provisioning entity analysis system can receive an input that can be used in a process to fill in any missing categories of information associated with the entities. For example, the received input can be canonical data that can be used to estimate identification information of the provisioning entity. An exemplary canonical data can comprise data that can be received from a data source external to the provisioning entity analysis system (e.g., Yelp™). For example, if an entity in the database (e.g., data structure 300) is an Italian restaurant, the provisioning entity category 360 can be represented by an MCC 5812 signifying it as a restaurant but might not be able to signify that it is an Italian restaurant. In such a scenario, canonical data such as Yelp™ review information can be analyzed to further identify the provisioning entity as an Italian restaurant. Another example for applying received canonical data can be to differentiate between an entity that is no longer in business from an entity that might have changed its name. In this example, canonical data can be received from an external source (e.g., Factual™) that can comprise a "status" flag as part of its data, which can signify whether the entity is no longer in business.

In step 430 information including one or more interactions associated with the first entity (e.g., the pizzeria) and the plurality of entities (e.g., all restaurants in a given zip code) can be acquired. The information can be acquired by accessing a data structure (e.g., data structure 300) comprising several categories of information showing interactions associated with multiple entities. The data structure can be similar to the exemplary data structure 300 described in **FIG. 3** above. The one or more interactions can include information associated with a provisioning entity and a consuming entity.

In step 440, a cohort can be created by processing the one or more interactions to select one or more entities associated with the first entity. Processing information can involve performing statistical analysis on the one or more interactions. In some embodiments, the cohort can be created based at least one of: a similarity between attributes of consuming entities that are associated with the first provisioning entity and consuming entities that are associated with other provisioning entities; a location information associated with the first provisioning entity and associated with other provisioning entities; information representing a market share associated with the first provisioning entity and a market share associated with the other provisioning entities; and information representing a wallet share associated with the first provisioning entity and a wallet share associated with the other provisioning entities.

A similarity between attributes of consuming entities that are associated with the first provisioning entity and consuming entities that are associated with other provisioning entities can be used to determine the cohort of provisioning entities associated with the first provisioning entity. For example, consuming entity demographic information (e.g., age, gender, income, and/or location) can be analyzed between consuming entities of the first provisioning entity and customer entities of the other provisioning entities to select provisioning entities that have similar customer entity demographic information to create the cohort. By way of example, a pizzeria located near a campus can have customers that are mostly young adults and have low incomes. Similarly, a deli located near the campus can also have customers that are mostly young adults and have low incomes. The deli can be selected to be part of the pizzeria's cohort because of the similarities in the demographics of their consuming entities.

In some embodiments, provisioning entities can be selected to create a cohort by using a weighted consuming entity correlation comparison. One method of implementing the weighted consuming entity correlation comparison can be by analyzing interactions between consuming entities and a first provisioning entity ("first provisioning entity interactions") with that of interactions between consuming entities and the other provisioning entities ("other provisioning entities interactions"). In some embodiments, for example, a first entity vector can be calculated representing consuming entity visits to the first provisioning entity (e.g., {16 0 12 6 10 6} corresponding to Consuming Entities #1-6). Similarly, other entity vectors can be calculated for the other provisioning entities representing consuming entity visits to the other provisioning entities (e.g., {8 1 12 12 0 0} for Provisioning Entity #2, {0 0 7 10 91} for Provisioning Entity #3, all corresponding to Consuming Entities #1-6). In some embodiments, the entity vector can represent the amount spent by a consuming entity in a specified temporal period, e.g., three months. For example, the vector {$212 $0 $170 $156 $68 $35} can correspond to the amount that Consuming Entities #1-6 spent at Provisioning Entity # 1 in the past three months. In some embodiments, the entity vector can represent the number of consuming entity visits in which the consuming entity spent greater than a predetermined amount (e.g., $100) or the vector can represent any other means of representing an aggregated set of interactions between each consuming entity and each provisioning entity.

In some embodiments, the vectors can be filtered (e.g., less influential entries can be eliminated). For example, consuming entities that have very few visits, such as no more than one visit to any entity (e.g., Consuming Entity #2 in the example above) can be removed from the entity vectors. In some embodiments, visits can be correlated with a temporal period. The temporal period can be determined using the information associated with the one or more interactions (e.g., time of interaction category 380 shown in exemplary data structure 300 in **FIG. 3**). Visits that are less recent (e.g., over one year old) can be removed from the entity vectors. In some embodiments, vector entries can correspond to temporal based interactions. For example, the entity vector can be represented by {4 5 9 0} corresponding to Consuming Entity #1 visiting Provisioning Entity #1 four times on weekdays and five time on weekends, and Consuming Entity #2 visiting Provisioning Entity #1 nine times on weekdays and zero times on weekends. The temporal based interactions can correspond to any temporal period, e.g., day of week, month of year, and time of day, or any combination thereof.

In some embodiments, the vectors can be preprocessed before determining the similarity between them. For example, in some embodiments, a variance stabilizing transformation can be applied to the vectors. In some embodiments, the percentile rank of each consuming entity can be calculated for each provisioning entity. In the example above, Provisioning Entity #2 vector, {0 0 710 9 1}, can be preprocessed to create the vector {10 10 60 100 80 40} corresponding to the percentile rank of each consuming entity. In some embodiments, the percentile rank, instead of raw values, can be used to determine a similarity between the first provisioning entity vector and the other provisioning entity vectors.

A similarity between the first provisioning entity vector and the other provisioning entities vectors can be calculated. A level of similarity between two vectors can be measured, for example, using cosine similarity or any other suitable distance of similarity measure between the vectors. In some embodiments, a predetermined number of other provisioning entities can be selected for the cohort (e.g., the 100 most similar provisioning entities). In some embodiments, all provisioning entities with a similarity above a predetermined threshold can be selected for the cohort. In some embodiments, provisioning entities can be selected such that no provisioning entity contributes more than a predetermined percentage to the cohort. For example, the cohort can have sufficient entities such that a large entity (e.g., Walmart™) does not comprise more than 15% of the revenue of the total cohort. In some embodiments, the revenue of a large entity can be down weighted so that it does not contribute more than a predetermined percentage to the cohort.

In some embodiments, location information associated with the first provisioning entity and with other provisioning entities can be analyzed to identify a group of provisioning entities associated with the first provisioning entity. For example, other provisioning entities that are located within a specified distance to a location of the first provisioning entity can be selected to be part of the cohort associated with the first provisioning entity. Restaurants located within 25 miles of the pizzeria, for example, can be selected for the pizzeria's cohort. In some embodiments, other distance criteria such as, for example, same zip code, can be used to identify the cohort of provisioning entities. In some embodiments, location information can be a specific building or neighborhood. For example, a restaurant situated in an airport can be interested in analyzing its own performance relative to other restaurants situated within the same airport. In this example, the location can be the airport.

In some embodiments, information representing a market share associated with the first provisioning entity and a market share associated with the other provisioning entities can be used to select provisioning entities to create a cohort associated with the first provisioning entity. For example, a high-end bicycle store can be interested in comparing its performance against other high-end bicycle stores. In other words, a cohort of high-end bicycle stores can be selected based on a market share analysis of high-end bicycle stores.

In some embodiments, information representing a wallet share associated with the first provisioning entity and a wallet share associated with the other provisioning entities can be used to select provisioning entities to create a cohort associated with the first provisioning entity. For example, a novelty late-night theatre can be interested in comparing its performance against other provisioning entities that also operate late-night (e.g., bars or clubs) and hence can likely compete with those entities for a consuming entity's time and money. An exemplary definition of wallet share can be a percentage of consuming entity spending over a period of time such as on a daily basis or a weekly basis etc.

In some embodiments, the group of provisioning entities the wallet share can be determined by using a multi-timescale correlation comparison. Implementing the multi-timescale correlation comparison can be by analyzing interactions between a consuming entity and a first provisioning entity ("first provisioning entity interactions") with that of interactions between the consuming entity and a second provisioning entity ("second provisioning entity interactions"). For example, if the first provisioning entity interactions are correlated with the second provisioning entity interactions on a daily timescale but anti-correlated (or inversely correlated) on an hourly timescale, then the first provisioning entity and the second provisioning entity can be defined as complementary entities rather than competitive entities. In such scenarios, the second provisioning entity would not be selected for the cohort associated with the first provisioning entity. Alternatively, if the first provisioning entity interactions are anti-correlated with the second provisioning entity interactions on a daily timescale but correlated on an hourly timescale, then the first provisioning entity and the second provisioning entity can be defined as competitive entities. In such scenarios, the second provisioning entity can be selected to create the cohort associated with the first provisioning entity.

In some embodiments, the wallet share can be further processed to remove the effects of seasonality. For example, provisioning entities may compete on a short time scale (e.g., time of day, day of week, etc.), but on a longer timescale, one provisioning entity may be gaining market share over the other. In this example, the provisioning entities can be correlated because of their short term competition even though one of the provisioning entities is trending up while the other is trending down. In this example, the temporal period to determine wallet share can be lengthened and seasonal effects can be removed.

In step 450, the cohort can be outputted. In some embodiments, the cohort can be outputted as a table listing the provisioning entities by unique identifier (e.g., 10927248190), by name (e.g., Pizza Hut, Ike's Place, etc.), or by any other means for identifying each provisioning entity. In some embodiments, the table can also include a weight for each provisioning entity corresponding to the match quality between the selected provisioning entity (e.g., the entity for which the cohort is created) and the other provisioning entities in the cohort. The weight can be any positive real number (e.g., 0.90 or 90). In some embodiments, the cohort can be outputted as one or more filter selections to be applied to a database (e.g., data structure 300). For example, a cohort can be outputted as filter selection 94301 for provisioning entity zip code sub-category 356 and Italian restaurant as type of provisioning entity category 360. In some embodiments, the cohort can be outputted for future use in analyzing entity performance. For example, a method for analyzing entity performance, such as the methods described in the Entity Performance Applications can use the cohort to compare the first provisioning entity performance to the cohort performance.

**FIG. 5** shows an exemplary user interface 500 for acquiring one or more user inputs according to some embodiments. User interface 500 can be generated by a provisioning entity analysis system (e.g., provisioning entity analysis system 210), according to some embodiments. User interface 500 can be used to acquire user inputs in different formats. In some embodiments, user interface 500 can acquire general information 510 associated with the first provisioning entity. For example, user interface 500 can acquire the name 511 of the first provisioning entity (e.g., Paul's Pizza), the location 512 of the first provisioning entity (e.g., 123 Main St, Palo Alto, CA 94301), and contact information 513 associated with the first provisioning entity (e.g., (650) 101-1001). The user can input the textual information with an input device 114 (e.g., a keyboard)

User interface 500 can also acquire additional information associated with first provisioning entity. The additional information can include additional details about the first provisioning entity 520, reasons consuming entities visit 530 the first provisioning entity, and known competitors 540 of the first provisioning entity. Details about the first provisioning entity 520 can include a type 521 of the provisioning entity. In some embodiments, the type 521 can be selected from a drop down menu with prepopulated choices (e.g., Bar/Rest., Hotel, etc.). Canonical data can be used to prepopulate the choices. An exemplary canonical data can comprise data that can be received from a data source external to the provisioning entity analysis system (e.g., Yelp™). For example, Yelp™ review information can be analyzed to provide additional prepopulated choices (e.g., Italian restaurant, full bar, trendy, affordable, etc.). In some embodiments, type can be manually entered by a user (e.g., pizzeria). Additional details about the first provisioning entity 520 can also include one or more descriptive tags 522 associated with the entity. In some embodiments, the one or more descriptive tags 522 can be prepopulated based on the type 521 of entity selected. For example, if a restaurant type is selected, the one or more descriptive tags can include affordable, trendy, kids menu, patio, full bar, etc. In some embodiments, the tags can be prepopulated from canonical data, such as Yelp™. For example, the tags can include keywords or recurring tokens in the Yelp™ reviews of the first provisioning entity. User interface 500 can allow a user to deselect a descriptive tag by clicking on the "x" depicted in the tag. For example, in **FIG. 5****,** full bar tag 523 has been deselected and user interface 500 would no longer display this tag.

In some embodiments, user interface 500 can allow a user to enter one or more tags 624 that were not part of the prepopulated tags. For example, a pizzeria may want to indicate that its restaurant is family friendly and the user may want to compare its performance to other family friendly competitors. For consistency, user interface 500 can autocomplete new tag entries 524 as the user enters the text. As shown in **FIG. 5****,** user interface 500 can autocomplete "Family Fr" to the preexisting tag, "Family Friendly." In some embodiments, a user can enter a new tag (e.g., a tag that user interface 500 did not autocomplete). User interface 500 can save the new tag for future use. A user can add the tag by clicking the add tag button.

User interface 500 can also acquire information associated with reasons consuming entities visit 530 the first provisioning entity. In some embodiments, the reasons can be prepopulated (e.g., value 532). Alternatively, the user can enter new reasons (e.g., musical selection). In some embodiments, user interface 500 can allow a user to rate each reason on a scale (e.g., scale 531) of importance. For example, a score of "1" can indicate that a reason is not important, whereas a score of "5" can indicate that a reason is very important. For Paul's Pizzeria, value 532 is an important factor as shown by the selected circle 533. In other embodiments the scale can be represented by textual descriptions (e.g., not important, somewhat important, very important, etc.). Alternatively, in some embodiments, the user interface can allow the user to rank the top reasons consuming entities visit its establishment (e.g., 1. Value, 2., Cuisine, 3. Location, 4. Quality, and 5. Ambience).

User interface 500 can also acquire information associated with known competitors 540 of the first provisioning entity. User interface 500 can allow a user to enter a name 541 (e.g., Marco's Pizza) of a competitor. In some embodiments, a database (e.g., data structure 300) can be searched for location information associated with the provisioning entity (e.g., provisioning entity location category 350). If a match in the database is found, user interface 500 can display the entity information 542 for the user to review. If this is the correct entity, the user can add the entity to the list of known competitors 543. In other embodiments, a canonical database, such as Yelp™ can be searched to identify the competitor. In some embodiments, the identified competitor may not be included in the cohort (e.g., when the competitor is identified using a canonical database, but database 300 contains no interaction information for the identified competitor). User interface 500 can acquire the information when a user clicks the submit button 550.

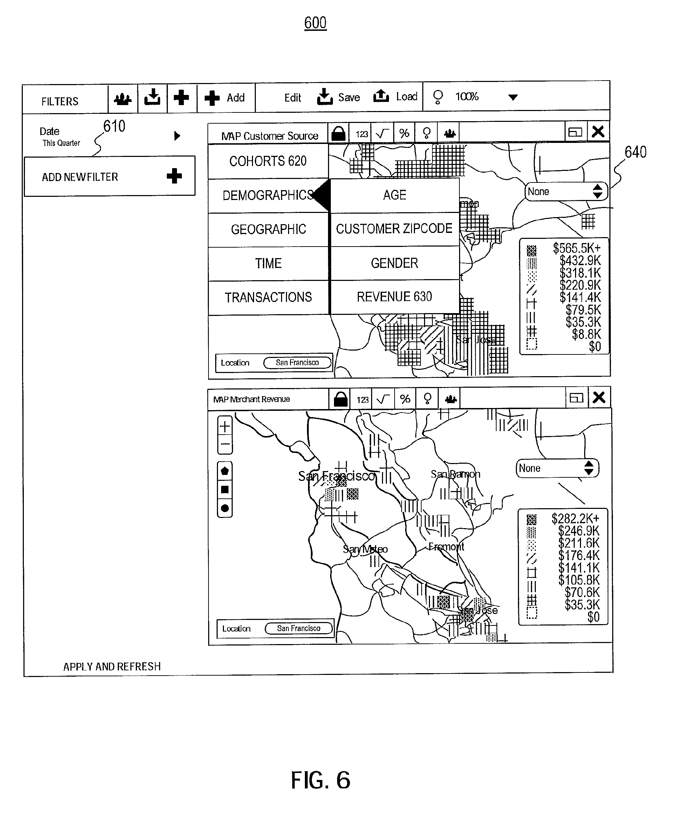

**FIG. 6** shows an exemplary user interface 600 generated by a provisioning entity analysis system (e.g., provisioning entity analysis system 210), according to some embodiments. User interface 600 includes an option to add one or more new filters (e.g., add new filter 610). In some embodiments, the option to add one or more filters can include adding filters to display an entity's performance comprising either cohort analysis (e.g., cohorts 620), demographic analysis, geographic analysis, time-based analysis, and interaction analysis. Cohort analysis allows a user to view cohort information (e.g., revenue information for competitors of the pizzeria) geographically.

User interface 600 can include map 640, which can show, for example, a representation of revenue of the cohort in terms of geohash regions (while shown as shaded rectangles, they can also include any unshaded rectangles). In some embodiments, after a user enters information into the add new filter (e.g., add new filter 610), the provisioning entity analysis system receives a message to regenerate or modify the user interface. For example, if a user entered cohorts 620 into the add new filter box, the provisioning entity analysis system would receive a message indicating that a user interface should display a map with information associated with the cohort (e.g., revenue or customer demographic information) for the given region of the map (e.g., San Francisco Bay Area), and it can generate a user interface with map 640 showing a representation of income information of consuming entity using geohash regions. For example, map 640 displays cohort revenue as shaded and unshaded rectangles in geo-hash regions.

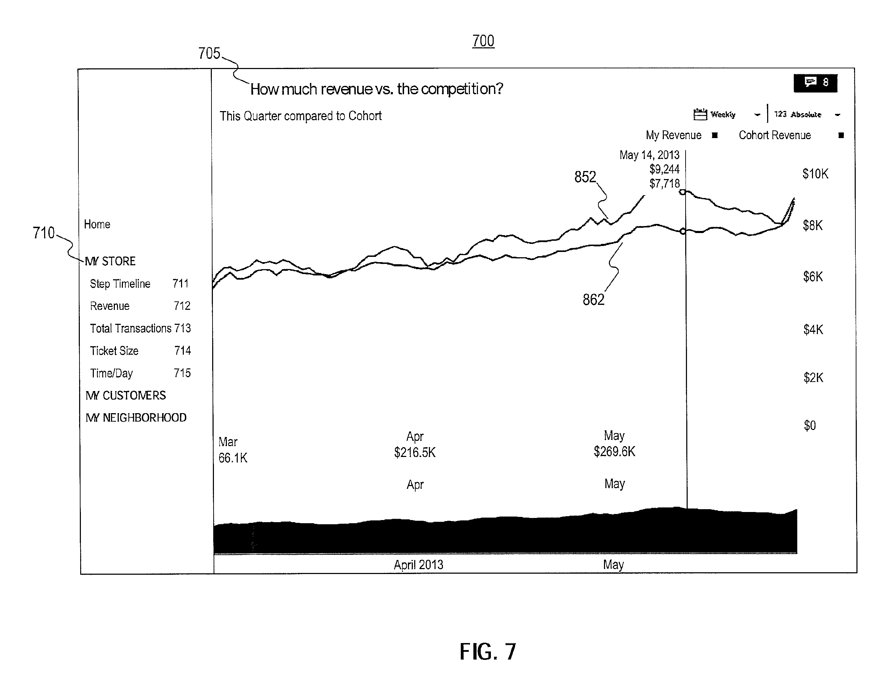

**FIG. 7** shows a user interface 700 generated by a provisioning entity analysis system (e.g., provisioning entity analysis system 210), according to some embodiments. In some embodiments, user interface 700 includes an option to add one or more inputs for categories to be compared between the first entity and the cohort, (e.g. the cohort determined using method 400). For example, user interface 700 can include categories representing timeline 711, revenue 712, total transactions 713, ticket size 714, and time/day 715. It will be understood that other categories can be included in user interface 700.

The information used to populate these categories are derived from a data structure (e.g., data structure 300). For example, the amount of revenue that an entity generates for a given time period can be determined by calculating the relevant interaction amounts with that entity within the appropriate time period.

User interface 700 can depict two graphs (e.g., graph 752 and graph 762) to represent a performance comparison between the first entity and the cohort. For example, graph 752 can represent a performance of the first entity (e.g., the pizzeria) for the selected category revenue 712. In the exemplary embodiment depicted in user interface 700, the pizzeria intends to compare its own revenue performance with that of its cohort (e.g., its competitors) over a given period of time (e.g., over the current quarter). Graph 752 can represent revenue of the pizzeria over the current quarter whereas graph 762 can represent the average revenue of the cohort (e.g., the pizzeria's competitors) over the same current quarter. It will be understood that in some embodiments, entity performance and cohort performance can be represented using different approaches such as, for example, charts, maps, histograms, numbers etc.

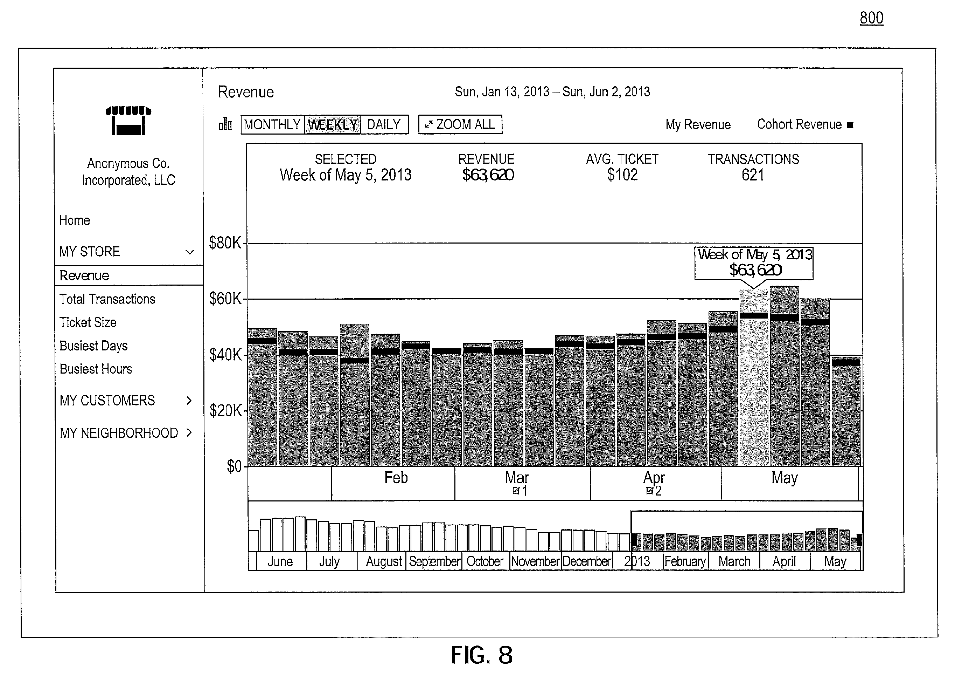

**FIG. 8** shows a screenshot of an exemplary user interface 800 that represents revenue depicted temporally, consistent with some embodiments. A provisioning entity analysis system (e.g., provisioning entity analysis system 210) can generate exemplary user interface 800. User interface 800 can represent revenue information in a chart, such as the bar chart shown in the top panel of **FIG. 8****.** In some embodiments, each bar in the bar chart can represent revenues for a period of time (e.g., a day, week, month, quarter, or year). The granularity or time period for each bar can be based on the selection of the "Monthly," "Weekly," and "Daily" boxes in the top left portion of the bar chart.

In some embodiments, user interface 800 allows a user to select a particular bar or time period of interest. For example, the entity can select the "May" bar. To indicate that "May" has been selected, user interface 800 can display that month in a different color. In some embodiments, user interface 800 can also display additional information for the selected bar. For example user interface 800 can display the week selected (e.g., Week of May 5, 2013), the revenue for that week (e.g., $63,620), the average ticket size (e.g., $102), the number of transactions (e.g., 621), and the names of holidays in that month, if any. In some embodiments, user interface 800 can allow a user to compare its revenues to the cohort. For example, the lines on each bar of **FIG. 8** represent average cohort revenue for the selected time period. In some embodiments, user interface 800 can include a bottom panel depicting a bar chart of revenue for a longer period of time, such as the past twelve months. User interface 800 can highlight the region currently depicted in the top panel by changing the color of the corresponding bars in the bottom panel. In some embodiments, user interface 800 can allow an entity to drag the highlighted region on the bottom panel to depict a different time period in the top panel.

Embodiments of the present disclosure have been described herein with reference to numerous specific details that can vary from implementation to implementation. Certain adaptations and modifications of the described embodiments can be made. Other embodiments can be apparent to those skilled in the art from consideration of the specification and practice of the embodiments disclosed herein. It is intended that the specification and examples be considered as exemplary only, with a true scope of the present disclosure being indicated by the following claims. It is also intended that the sequence of steps shown in figures are only for illustrative purposes and are not intended to be limited to any particular sequence of steps. As such, it is appreciated that these steps can be performed in a different order while implementing the exemplary methods or processes disclosed herein.

## Claims

1. A system for determining a cohort of entities, the system comprising:
one or more computer-readable storage media configured to store instructions; and
one or more processors configured to execute the instructions to:
acquire one or more user inputs;
identify, based on the one or more user inputs, a plurality of entities sharing one or more attributes with a first entity;
acquire information including one or more interactions associated with the first entity and the plurality of entities;
create the cohort by processing the one or more interactions to select one or more entities of the plurality of entities associated with the first entity; and
output the cohort.

2. The system of claim 1, wherein the one or more processors are further configured to select the one or more entities of the plurality of entities based on one or more of:
a similarity between attributes of consuming entities that are associated with the first entity and the one or more entities of the plurality of entities;
a similarity between location information associated with the first entity and the one or more entities of the plurality of entities;
a market share of the first entity and the one or more entities of the plurality of entities; and
a wallet share of the first entity and the one or more entities of the plurality of entities.

3. The system of claim 2, wherein to select the one or more entities based on the similarity between attributes of consuming entities that are associated with the first entity and the plurality of entities, the one or more processors are further configured to:
obtain, based on the one or more interactions, a first entity vector including a plurality of visits by consuming entities to the first entity;
obtain, based on the one or more interactions, a plurality of entity vectors including a plurality of visits by consuming entities to the plurality of entities; and
select the one or more entities of the plurality of entities based at least on the similarity between the first entity vector and one or more entity vectors of the plurality of entity vectors.

4. The system of claim 2, wherein to select the one or more entities based on the wallet share of the first entity and the one or more entities of the plurality of entities, the one or more processors are further configured to:
obtain, based on the one or more interactions, a first entity vector including a plurality of visits by temporal period to the first entity;
obtain, based on the one or more interactions, a plurality of entity vectors including a plurality of visits by temporal period to the plurality of entities; and
select the one or more entities of the plurality of entities based at least on the similarity between the first entity vector and one or more entity vectors of the plurality of entity vectors.

5. The system of any preceding claim, wherein the one or more processors are further configured to select a predetermined number of entities from the plurality of entities.

6. The system of any preceding claim, wherein the one or more processors are further configured to select sufficient entities from the plurality of entities, wherein each of the selected sufficient entities do not contribute more than a predetermined percentage to the cohort.

7. The system of any preceding claim, wherein the one or more attributes include a type of the first entity and a location of the first entity.

8. A method for determining a cohort of entities, the method being performed by one or more processors and comprising:
acquiring one or more user inputs;
identifying, based on the one or more user inputs, a plurality of entities sharing one or more attributes with a first entity;
acquiring information including one or more interactions associated with the first entity and the plurality of entities;
creating the cohort by processing the one or more interactions to select one or more entities of the plurality of entities associated with the first entity; and
outputting the cohort.

9. The method of claim 8, wherein selecting the one or more entities of the plurality of entities is based on one or more of:
a similarity between attributes of consuming entities that are associated with the first entity and the one or more entities of the plurality of entities;
a similarity between location information associated with the first entity and the one or more entities of the plurality of entities;
a market share of the first entity and the one or more entities of the plurality of entities; and
a wallet share of the first entity and the one or more entities of the plurality of entities.

10. The method of claim 9, wherein selecting the one or more entities based on the similarity between attributes of consuming entities that are associated with the first entity and the one or more entities of the plurality of entities comprises:
obtaining, based on the one or more interactions, a first entity vector including a plurality of visits by consuming entities to the first entity;
obtaining, based on the one or more interactions, a plurality of entity vectors including a plurality of visits by consuming entities to the plurality of entities; and
selecting the one or more entities of the plurality of entities based at least on the similarity between the first entity vector and one or more entity vectors of the plurality of entity vectors.

11. The method of claim 9, wherein selecting the one or more entities based on the wallet share of the first entity and the one or more entities of the plurality of entities comprises:
obtaining, based on the one or more interactions, a first entity vector including a plurality of visits by temporal period to the first entity;
obtaining, based on the one or more interactions, a plurality of entity vectors including a plurality of visits by temporal period to the plurality of entities; and
selecting the one or more entities of the plurality of entities based at least on the similarity between the first entity vector and one or more entity vectors of the plurality of entity vectors.

12. The method of any of claims 8 to 11, further comprising selecting a predetermined number of entities from the plurality of entities.

13. The method of any of claims 8 to 12, further comprising selecting sufficient entities from the plurality of entities, wherein each entity of the selected sufficient entities do not contribute more than a predetermined percentage to the cohort.

14. The method of any of claims 8 to 13, wherein the one or more attributes include a type of the first entity and a location of the first entity.

15. A computer program comprising instructions that are executable by one or more processors to cause the one or more processors to perform a method as claimed in any of claims 8 to 14.
